# EUROPÄISCHE PATENTSCHRIFT

(11) **EP 3 829 936 B1**
(45) Veröffentlichungstag und Bekanntmachung des Hinweises auf die Patenterteilung: **13.03.2024**
(21) Anmeldenummer: 19729516.5
(22) Anmeldetag: 06.06.2019
(51) Int. Cl.: B60S 1/38, B60S 1/40, B60S 1/04

(54) **ADAPTEREINHEIT**
ADAPTER UNIT
ENSEMBLE ADAPTATEUR

(30) Priorität: 30.07.2018 DE 102018212666
(43) Veröffentlichungstag der Anmeldung: 09.06.2021
(73) Patentinhaber: Robert Bosch GmbH, 70442 Stuttgart (DE)
(72) Erfinder: KRAEMER, Godelieve, 76549 Huegelsheim (DE); BUBBA, Marcello, 3210 Linden (BE); BRATEC, Herve, 3012 Wilsele (BE); KRUSE, Michael, 76547 Sinzheim (DE); DEPONDT, Helmut, 3370 Boutersem (BE); TRUYENS, Stijn, 3300 Tienen (BE)
(86) Internationale Anmeldenummer: PCT/EP2019/064801
(87) Internationale Veröffentlichungsnummer: WO 2020/025197

(56) Entgegenhaltungen:
- DE-A1-102013 220 255
- DE-A1-102016 211 162
- FR-A1- 3 044 618

## Beschreibung

Die Erfindung betrifft eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken.

### Stand der Technik

Es sind bereits Wischvorrichtungen umfassend einen Wischarm und ein Wischblatt sowie eine Adaptereinheit zur lösbaren Kopplung eines Wischarms mit einem Wischblatt vorgeschlagen worden. Solche Wischvorrichtungen haben den Nachteil, dass der Wischarm stets eine hohe Anpresskraft zum Andrücken des Wischblatts an eine Fahrzeugscheibe aufbringen muss, um eine ausreichende Wischleistung zu gewährleisten. DE 10 2013 220255 A1 offenbart eine Adaptereinheit ähnlich dem Oberbegriff von Anspruch 1.

### Offenbarung der Erfindung

### Vorteile

Die vorliegende Erfindung beschreibt eine Adaptereinheit, die zu einer Kopplung, insbesondere lösbaren Kopplung eines Wischblatts mit einem Wischarm vorgesehen ist, aufweisend eine Windabweiserfläche, welche dazu eingerichtet ist, eine anströmende Luft abzuweisen und das Wischblatt an eine Fahrzeugscheibe zu drücken, wobei die Windabweiserfläche durch einen Windabweiserflächenrand umrandet wird und der Windabweiserflächenrand wenigstens
- eine windzugewandte Seite - welche sich weitgehend in einer Wischarmrichtung erstreckt - sowie
- eine windabgewandte Seite - welche sich weitgehend in die Wischarmrichtung erstreckt - sowie
- eine rechte Seite - welche zwischen der windzugewandten Seite und der windabgewandten Seite angeordnet ist und an der Wischarmseite des Adapters angeordnet ist, an der vorgesehen ist, die Adaptereinheit mit dem Wischarm zu koppeln - sowie
- eine hintere linke Seite - welche an der windabgewandten Seite angrenzt und an der Seite des Adapters angeordnet ist, welche der Wischarmseite gegenüberliegt - und
- Eine vordere linke Seite - welche an der windzugewandten Seite angrenzt und an der Seite des Adapters angeordnet ist, welche der Wischarmseite gegenüberliegt,
aufweist, wobei die windzugewandte Seite mit einem vorderen rechtsseitigen Winkel zwischen 2.5° und 15.0° zur windabgewandten Seite angeordnet ist; und die windabgewandte Seite und die rechte Seite einen hinteren Winkel zwischen 110° und 160°, bevorzugt zwischen 120° und 150°, besonders bevorzugt zwischen 130° und 140° aufspannen.

Das hat den Vorteil, dass die Windabweiserfläche bei schneller Fahrt aufgrund des sie anströmenden Fahrtwinds das Wischblatt an die Fahrzeugscheibe presst. Das erhöht eine Gesamtanpresskraft des Wischblatts an die Fahrzeugscheibe und verbessert die Wischleistung. Die benötigte Anpresskraft, mit welcher der Wischarm das Wischblatt an die Fahrzeugscheibe presst, wird auf diese Weise reduziert. Es kann ein günstigerer und/oder einfacherer und/oder zuverlässigerer und/oder kompakterer Wischarm mit einer geringeren Anpresskraft verwendet werden, insbesondere mit einer kleineren Feder zum Aufbringen der Anpresskraft. Weiterhin wird durch die Verwendung einer Windabweiserfläche gemäß der vorliegenden Erfindung verhindert, dass die Adaptereinheit bzw. eine Wischvorrichtung - umfassend die Adaptereinheit, das Wischblatt und den Wischarm - durch eine ungünstige Aerodynamik bei schneller Fahrt eine Kraft generiert, welche der benötigten Anpresskraft entgegengesetzt ist und so die Wischleistung verschlechtern würde oder sogar ein Wischen unmöglich machen würde. Durch die Adaptereinheit gemäß der vorliegenden Erfindung wird sichergestellt, dass aufgrund von aerodynamischen Effekten, insbesondere einem Wind, insbesondere Fahrtwind, eine resultierende Kraft das Wischblatt auf die Fahrzeugscheibe drückt. Dadurch, dass die erste Teilfläche und die zweite Teilfläche jeweils eine andere Geometrie und/oder eine andere Ausrichtung aufweisen, ist eine präzise Einstellung von Anpresskräften möglich, insbesondere einer Ausrichtung der Anpresskräfte.

Vorteilhaft verläuft der Windabweiserflächenrand entlang eines äußeren Umfangs der Windabweiserfläche. Der Windabweiserflächenrand ist insbesondere eine Begrenzung der Windabweiserfläche. Vorteilhaft grenzt die die hintere linke Seite an der vorderen linken Seite an.

Die Adaptereinheit kann mit der Windabweiserfläche einstückig ausgebildet sein. Unter einstückig soll in diesem Zusammenhang insbesondere stoffschlüssig verbunden, wie beispielsweise durch einen Schweißprozess und/oder einen Klebeprozess usw. und besonders vorteilhaft angeformt verstanden werden, wie durch die Herstellung aus einem Guss und/oder durch die Herstellung in einem Ein- oder Mehrkomponentenspritzverfahren.

Vorteilhaft weist die Adaptereinheit ein Wischarmkopplungselement auf, welches zur unmittelbaren oder mittelbaren Kopplung mit dem Wischarm vorgesehen ist. Vorteilhaft ist die Adaptereinheit mit dem Wischarmkopplungselement einstückig ausgebildet.

Vorteilhaft weist die Adaptereinheit ein Wischblattkopplungselement auf, welches zur unmittelbaren oder mittelbaren Kopplung mit dem Wischblatt vorgesehen ist. Vorteilhaft ist die Adaptereinheit mit dem Wischblattkopplungselement einstückig ausgebildet.

Es ist besonders vorteilhaft, wenn die Windabweiserfläche einen Hauptwinkel zwischen 25° und 75°, bevorzugt zwischen 40° und 60° mit einer Windanströmichtung einschließt. Auf diese Weise werden gute aerodynamische Eigenschaften der Adaptereinheit mit einem ausreichend großem Baumraum der Adaptereinheit ermöglicht, insbesondere für eine Unterbringung des Wischarmkopplungselements.

Unter einen Hauptwinkel ist der Winkel zu verstehen, den die Windabweiserfläche zur Windanströmrichtung aufweist. Vorteilhaft wird der Hauptwinkel um die Wischarmrichtung gemessen. Ein positiver Hauptwinkel zwischen 0° und 90° beschreibt dabei eine Windabweiserfläche, welche wenigstens teilweise zur Windanströmrichtung zugewendet ist. Je näher der Hauptwinkel an 90°, umso stärker ist die Windabweiserfläche der Windanströmrichtung zugewendet. Unter einer Windanströmrichtung soll die Richtung verstanden werden, in der der Fahrtwind in einem nicht wischenden Ruhezustand der an der Fahrzeugscheibe angebrachten Adaptereinheit bzw. eine Wischvorrichtung Wischvorrichtung - umfassend die Adaptereinheit, das Wischblatt und den Wischarm - anströmen würde.

Unter einer Wischarmrichtung soll eine Richtung verstanden werden, welche in Richtung einer größten Längsausdehnung des an der Adaptereinheit montierten Wischarms angeordnet ist, insbesondere in einer Grundstellung. Im unmontierten Zustand ist die Wischarmrichtung die Richtung an der Adaptereinheit, in die ein montierter Wischarm zeigen würde, insbesondere in einer Grundstellung.

Vorteilhaft wird der Hauptwinkel zwischen der Windanströmrichtung und einer Projektion der Windanströmrichtung auf die Windabweiserfläche aufgespannt, wobei die Projektion vorteilhaft entlang einer Projektionsebene durchgeführt wird, in welcher die Windanströmrichtung liegt und welche senkrecht oder weitgehend senkrecht zur Wischarmrichtung angeordnet ist. Es ist auch möglich, dass die Projektionsebene durch die Windanströmrichtung und einen Normalenvektor bzw. einen mittleren Normalenvektor der Windabweiserfläche aufgespannt wird. Bei einer gekrümmten bzw. nicht ebenen Windabweiserfläche ist es denkbar, dass der Hauptwinkel zwischen der Windanströmrichtung und einer Tangentialebene aufgespannt ist, wobei die Tangentialebene in einem ausgezeichneten Punkt - beispielsweise dem Mittelpunkt - der Windabweiserfläche liegt oder die Tangentialebene eines mittleren Normalenvektors der Windabweiserfläche ist. Unter einem mittleren Normalenvektor ist ein Vektor zu verstehen, der das Mittel über alle oder fast alle Normalenvektoren der Windabweiserfläche darstellt.

Die windzugewandte Seite ist insbesondere eine Seite der Windabweiserfläche, insbesondere ein Teilstück des Windabweiserflächenrands, welche in einem nicht wischenden Ruhezustand der an der Fahrzeugscheibe angebrachten Wischvorrichtung - umfassend die Wischarmadaptereinheit, das Wischblatt und den Wischarm - am nächsten an der Windanströmrichtung angeordnet ist, so dass der Fahrtwind zuerst an der windzugewandten Seite der Windabweiserfläche vorbeiströmt bzw. auf diese trifft. Bevorzugt ist die Windabweiserfläche so ausgebildet, dass die windzugewandte Seite in einem nicht wischenden Ruhezustand der an der Fahrzeugscheibe angebrachten Wischvorrichtung zumindest bereichsweise senkrecht oder weitgehend senkrecht zur Windanströmrichtung angeordnet.

Die windabgewandten Seite ist insbesondere eine Seite der Windabweiserfläche, insbesondere ein Teilstück des Windabweiserflächenrands, verstanden werden, welche in einem nicht wischenden Ruhezustand der an der Fahrzeugscheibe angebrachten Wischvorrichtung - umfassend die Wischarmadaptereinheit, das Wischblatt und den Wischarm - am entferntesten von der Windanströmrichtung angeordnet ist, so dass der Fahrtwind zuletzt an der windabgewandte Seite der Windabweiserfläche vorbeiströmt bzw. auf diese trifft. Bevorzugt ist die Windabweiserfläche so ausgebildet, dass die windabgewandte Seite in einem nicht wischenden Ruhezustand der an der Fahrzeugscheibe angebrachten Wischvorrichtung zumindest bereichsweise senkrecht oder weitgehend senkrecht zur Windanströmrichtung angeordnet.

Durch die in den Unteransprüchen aufgeführten Merkmale sind vorteilhafte Weiterbildungen Adaptereinheit möglich.

Eine Aerodynamik der Adaptereinheit wird weiter verbessert, wenn die hintere linke Seite und die vordere linke Seite einen linksseitigen Winkel zwischen 80° und 130°, bevorzugt zwischen 90° und 120°, besonders bevorzugt zwischen 100° und 110° aufspannen.

Die windzugewandete Seite ist mit einem vorderen rechtsseitigen Winkel zwischen 2.5° und 15.0°, bevorzugt zwischen 5.0° und 10.0° zur windabgewandten Seite angeordnet, wodurch die Adaptereinheit besonders laminar von einem Fahrtwind umströmt wird. Auf diese Weise werden unerwünschte Vibrationen der Adaptereinheit minimiert.

Eine weitere Verbesserung tritt ein, wenn die vordere linke Seite mit einem vorderen linksseitigen Winkel zwischen 10° und 60°, bevorzugt zwischen 20° und 50°, besonders bevorzugt zwischen 30° und 40° zur windabgewandten Seite angeordnet ist.

Die Aerodynamik der Adaptereinheit wird weiter verbessert, wenn die vordere linke Seite mit einem Innenwinkel zwischen 0° und 50°, bevorzugt zwischen 10° und 40°, besonders bevorzugt zwischen 20° und 30° zur rechten Seite angeordnet ist.

Weist die Windabweiserfläche einen viereckigen, herunterdrückbaren Knopf auf, welcher dazu eingerichtet ist, den Wischarm lösbar mit der Adaptereinheit zu koppeln, wobei zwei gegenüberliegende Seitenkanten einer Knopfkontur des Knopfs parallel oder weitgehend parallel zur rechten Seite ausgerichtet sind, hat das den Vorteil, dass der Knopf besonders strömungsgünstig geformt ist. Auf diese Weise werden durch den Knopf verursachte Turbulenzen minimiert.

Unter weitgehend parallel soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 0° abweicht. Unter weitgehend senkrecht soll verstanden werden, dass eine erste Achse mit einer zweiten Achse einen Winkel einschließt, der nicht mehr als 8°, vorteilhaft nicht mehr als 5°, besonders vorteilhaft nicht mehr als 2° von 90° abweicht.

Vorteilhaft ist die Windabweiserfläche einstückig mit dem Knopf ausgebildet.

Es ist vorteilhaft, wenn die Windabweiserfläche einen Knopf aufweist, welcher dazu eingerichtet ist, den Wischarm lösbar mit der Adaptereinheit zu koppeln, wobei der Knopf als ein in einer Knopföffnung angeordneter Einrastknopf ausgebildet ist, wobei der Einrastknopf so ausgebildet ist, dass der Einrastknopf mittig oder weitgehend mittig in der Knopföffnung angeordnet ist, wenn der Wischarm eingerastet ist und dass der Einrastknopf an einer oberen Kante der Knopföffnung anliegt, wenn der Wischarm nicht eingerastet ist.

Weist die Windabweiserfläche einen Knopf aufweist, welcher dazu eingerichtet ist, den Wischarm lösbar mit der Adaptereinheit zu koppeln, wobei der Knopf als ein Federknopf mit einer Feder zum Aufbringen einer Rückstellkraft ausgebildet ist, wobei die Feder ein Bogenstück mit wenigstens einer Rippe, vorzugsweise drei Rippen aufweist, wobei die wenigstens eine Rippe parallel oder weitgehend parallel zu einem Radius des Bogenstücks ausgerichtet ist und dazu vorgesehen ist, das Bogenstück zu versteifen, hat das den Vorteil, dass ein gewünschter Steifigkeitsgrad des Bogenstücks mit Hilfe der Rippen präzise einstellbar ist. Auf diese Weise kann ein Bedienkomfort der Adaptereinheit erhöht werden. Die Feder bzw. das Bogenstück ist insbesondere dazu ausgebildet, eine elastische Rückstellkraft aufzubringen, so dass der Knopf nach einem Herunterdrücken und Loslassen sich wieder zurück in eine Ausgangsposition bewegt. Vorteilhaft ist die Windabweiserfläche einstückig mit der Feder und/oder mit der wenigstens einen Rippe ausgebildet. Vorteilhaft ist der Knopf mit der wenigstens einen Rippe einstückig ausgebildet. Vorteilhaft ist die Feder und/oder das Bogenstück einstückig mit der wenigstens einen Rippe ausgebildet.

Ist die Adaptereinheit dazu eingerichtet ist, den Wischarm mit dem Wischblatt um eine Lagerachse schwenkbar zu verbinden, hat das den Vorteil, dass eine optimale Anpresskraft weitgehend über einem gesamten Wischbereich auf der Fahrzeugscheibe gewährleistet werden kann, insbesondere bei gekrümmten Fahrzeugscheiben.

Vorteilhaft ist die Adaptereinheit so ausgebildet, dass die Lagerachse parallel oder weitgehend parallel zur Windanströmrichtung angeordnet ist. Vorteilhaft ist die Adaptereinheit so ausgebildet, dass die Lagerachse senkrecht oder weitgehend senkrecht zu einer Wischarmrichtung angeordnet ist. Vorteilhaft ist die Lagerachse parallel oder weitgehend parallel zu einer vorgesehenen Wischrichtung angeordnet. Vorteilhaft ist die Lagerachse so angeordnet, dass sie in einem nicht wischenden Ruhezustand der an der Fahrzeugscheibe angebrachten Wischvorrichtung - umfassend die Wischarmadaptereinheit, das Wischblatt und den Wischarm - parallel oder weitgehend parallel zu einer Windanströmrichtung bzw. zur einer Fahrzeugfahrrichtung angeordnet ist. Besonders vorteilhaft liegt die Lagerachse in einem am Fahrzeug montierten Zustand parallel zur Fahrzeugscheibe, bevorzugt an jeder Position über eine Wischbewegung.

Besonders vorteilhaft ist eine Adaptereinheit, umfassend eine Wischarmadaptereinheit und eine Wischblattadaptereinheit, wobei die Wischarmadaptereinheit zur Kopplung mit dem Wischarm vorgesehen ist und die Wischblattadaptereinheit dazu vorgesehen ist, das Wischblatt aufzunehmen, wobei die Wischarmadaptereinheit eine Wischblattadaptereinheitaufnahme aufweist, welche dazu vorgesehen ist, die Wischblattadaptereinheit um die Lagerachse schwenkbar aufzunehmen. Auf diese Weise kann zu jedem Zeitpunkt einer Wischbewegung eine besonders günstige Aerodynamik eines Verbindungsbereichs zwischen Adaptereinheit und Wischarm gewährleistet werden.

Vorteilhaft ist die Wischarmadaptereinheit mit der Windabweiserfläche und/oder mit der Wischblattadaptereinheitaufnahme einstückig ausgebildet. Vorteilhaft ist die Wischarmadaptereinheit fest mit den Wischarm verbindbar, insbesondere so, dass der Wischarm im mit der Wischarmadaptereinheit verbundenen Zustand weitgehend nicht gegenüber der Wischarmadaptereinheit beweglich ist.

Unter einer Wischblattadaptereinheit soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit der Wischblattadaptereinheit verbundenen Zustand weitgehend nicht gegenüber der Wischblattadaptereinheit beweglich ist. Vorteilhaft weist die Wischblattadaptereinheit ein Verbindungselement auf, welches dazu vorgesehen ist, mit der Wischblattadaptereinheitaufnahme der Wischarmadaptereinheit schwenkbar zu koppeln. Vorteilhaft ist die Wischblattadaptereinheit mit dem Kontaktbereich und/oder mit dem Verbindungselement einstückig ausgebildet. Es ist auch denkbar, dass die Wischblattadaptereinheit mit dem Wischblatt oder mit einem Wischblattbauteil einstückig ausgebildet ist. Vorteilhaft ist die Wischblattadaptereinheitaufnahme so ausgebildet, dass die Lagerachse senkrecht oder weitgehend senkrecht zu einer Wischarmrichtung angeordnet ist.

Besonders vorteilhaft ist eine Adaptereinheit, umfassend ein Grundelement, ein Abdeckelement und eine Wischarmaufnahme, welche dazu vorgesehen ist, den Wischarm um die Lagerachse schwenkbar aufzunehmen, wobei das Abdeckelement mit dem Grundelement verbindbar ausgebildet ist und die Wischarmaufnahme weitgehend abdeckt, und wobei das Abdeckelement die Windabweiserfläche aufweist, und wobei das Grundelement dazu eingerichtet ist das Wischblatt aufzunehmen, und wobei insbesondere das Abdeckelement mit dem Grundelement fest verbindbar ausgebildet ist, so dass das mit dem Grundelement verbundene Abdeckelement gegenüber dem Grundelement weitgehend unbeweglich ist. Auf diese Weise kann zu jedem Zeitpunkt einer Wischbewegung eine besonders günstige Aerodynamik eines Verbindungsbereichs zwischen Adaptereinheit und Wischblatt gewährleistet werden.

Vorteilhaft ist das Abdeckelement mit der Windabweiserfläche einstückig ausgebildet. Vorteilhaft weist das Abdeckelement ein Kopplungselement auf welches zur Verbindung mit dem Grundelement vorgesehen ist. Vorteilhaft ist das Abdeckelement mit dem Kopplungselement einstückig ausgebildet. Unter einem Grundelement soll insbesondere ein Adapter verstanden werden, das einen Kontaktbereich zum Wischblatt bzw. zu einem Wischblattbauteil aufweist und mit dem Wischblatt bzw. dem Wischblattbauteil verbindbar ist, vorteilhaft fest verbindbar ist, insbesondere so verbindbar, dass das Wischblatt in mit dem Grundelement verbundenen Zustand weitgehend nicht gegenüber dem Grundelement beweglich ist. Vorteilhaft weist das Grundelement ein Aufnahmeelement auf, welches dazu vorgesehen ist, mit dem Abdeckelement bzw. mit dem Kopplungselement des Abdeckelements zu koppeln. Vorteilhaft ist die Wischblattadaptereinheit mit dem Kontaktbereich und/oder mit dem Verbindungselement einstückig ausgebildet. Es ist auch denkbar, dass das Grundelement mit dem Wischblatt oder mit einem Wischblattbauteil einstückig ausgebildet ist. Vorteilhaft weist das Grundelement die Wischarmaufnahme auf. Vorteilhaft ist das Grundelement mit der Wischarmaufnahme einstückig ausgebildet. Vorteilhaft ist die Wischarmaufnahme so ausgebildet, dass die Lagerachse senkrecht oder weitgehend senkrecht zu einer Wischarmrichtung angeordnet ist.

### Zeichnungen

In den Zeichnungen sind Ausführungsbeispiele der Adaptereinheit gemäß der vorliegenden Erfindung dargestellt und in der nachfolgenden Beschreibung näher erläutert. Es zeigen
Figur 1 eine Wischvorrichtung mit einer Adaptereinheit,
Figur 2 einen Schnitt durch die Adaptereinheit,
Figuren 3 und 4 Frontansichten der Adaptereinheit,
Figuren 5 und 6 Details der Adaptereinheit und
Figur 7 einen Schnitt durch eine Variante der Adaptereinheit.

### Beschreibung

In den verschiedenen Ausführungsvarianten erhalten gleiche Teile die gleichen Bezugszahlen.

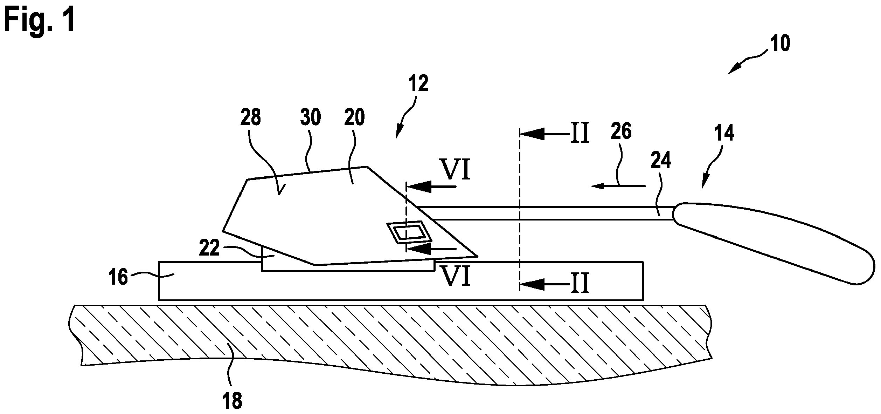

In der Figur 1 ist schematisch eine Wischvorrichtung 10 mit einer Adaptereinheit 12, einem Wischarm 14 und einem Wischblatt 16 in einer Seitenansicht gezeigt. Das Wischblatt 16 ist als Flachwischblatt ausgebildet. Das Wischblatt 16 ist zum Reinigen einer Fahrzeugscheibe 18 vorgesehen. Die Adaptereinheit 12 weist ein Abdeckelement 20 auf. Die Adaptereinheit weist ein Grundelement 22 auf. Der Wischarm 16 weist eine Wischstange 24 auf. Im Ausführungsbeispiel ist eine Hauptlängserstreckungsrichtung der Wischarmadaptereinheit parallel zu einer Wischarmrichtung 26 angeordnet. Eine Hauptlängserstreckungsrichtung des Wischblatts ist parallel zur Wischarmrichtung angeordnet. In vorteilhaften Varianten ist die Hauptlängserstreckungsrichtung der Wischarmadaptereinheit zumindest weitgehend parallel zu einer Wischarmrichtung 26 angeordnet. In vorteilhaften Varianten ist Hauptlängserstreckungsrichtung des Wischblatts ist zumindest weitgehend parallel zur Wischarmrichtung angeordnet. Das Abdeckelement weist eine Windabweiserfläche 28 auf. Die Windabweiserfläche weist einen Windabweiserflächenrand 30 auf. Der Windabweiserflächenrand 30 ist im gezeigten Ausführungsbeispiel als ein Fünfeck ausgebildet.

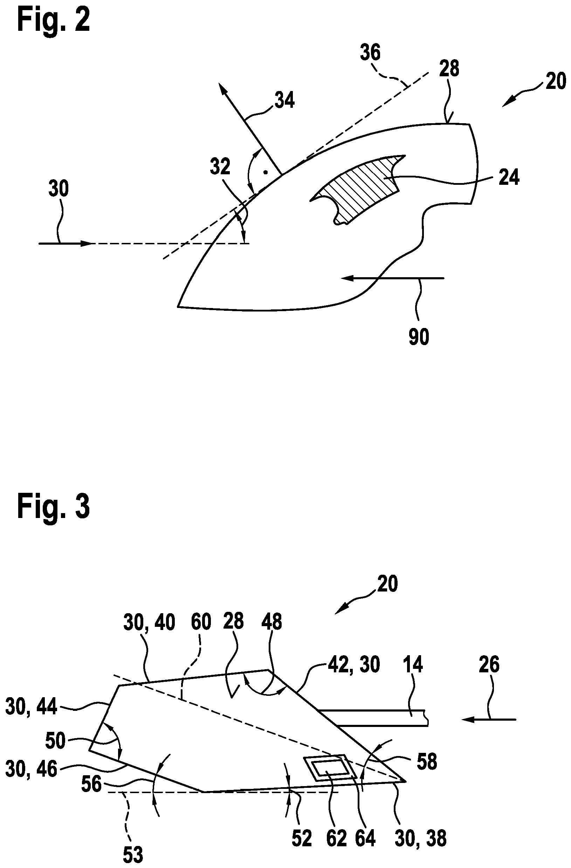

Figur 2 zeigt eine Seitenansicht auf das Abdeckelement in Wischarmrichtung 26. Figur 2 ist ein Schnitt entlang der Linie II-II (siehe Figur 1). Die Bildebene von Figur 2 ist senkrecht zur Wischarmrichtung 26 angeordnet. Die Windabweiserfläche 28 schließt mit einer Windanströmrichtung 30 einen Hauptwinkel 32 von 35° ein. Der Hauptwinkel wird zwischen der Windanströmrichtung und einer Tangentialebene eines mittleren Normalenvektors 34 der Windabweiserfläche aufgespannt. Die Tangentialebene liegt senkrecht zur Bildebene der Figur 2 bzw. parallel zur Wischarmrichtung 26 und wird in Figur 2 durch eine Schnittgrade 36 der Tangentialebene mit der Bildebene repräsentiert. Die Windabweiserfläche 28 ist entlang der Windanströmrichtung konvex ausgebildet.

In Varianten der Adaptereinheit ist die Windabweiserfläche wenigstens bereichsweise konvex ausgebildet, insbesondere konvex entlang der Windanströmrichtung. Darunter, dass eine Fläche der Adaptereinheit konvex ausgebildet ist, soll insbesondere verstanden werden, dass die Fläche aus der Adaptereinheit herausgewölbt ist. In weiteren Varianten der Adaptereinheit ist die Windabweiserfläche wenigstens bereichsweise konkav ausgebildet, insbesondere konkav entlang der Windanströmrichtung. Darunter, dass eine Fläche der Adaptereinheit konkav ausgebildet ist, soll insbesondere verstanden werden, dass die Fläche in die die Adaptereinheit hineingewölbt ist.

Figur 3 zeigt eine Frontansicht des Abdeckelements 20. Die Bildebene der Figur 3 ist senkrecht zum mittleren Normalenvektor 34 (siehe Figur 2) angeordnet. Der Windabweiserflächenrand 30 weist eine windzugewandte Seite 38 auf. Der Windabweiserflächenrand 30 weist eine windabgewandte Seite 40 auf. Der Windabweiserflächenrand 30 weist eine rechte Seite 42 auf. Der Windabweiserflächenrand 30 weist eine hintere linke Seite 44 auf. Der Windabweiserflächenrand 30 weist eine vordere linke Seite 46 auf.

Die windabgewandte Seite und die rechte Seite spannen einen hinteren Winkel 48 von 135° auf. Der hintere Winkel 48 liegt in innerhalb der Windabweiserfläche 28.

Die hintere linke Seite und die vordere linke Seite spannen einen linksseitigen Winkel 50 von 85° auf. Der linksseitige Winkel 50 liegt innerhalb der Windabweiserfläche 28.

Die windzugewandte Seite ist mit einem vorderen rechtsseitigen Winkel 52 von 3.0° zur windabgewandte Seite angeordnet. Der vordere rechtsseitige Winkel 52 liegt außerhalb der Windabweiserfläche 28. Der vordere rechtsseitige Winkel 52 wird zwischen einer gedachten ersten Hilfsgraden 53 und der windzugewandten Seite aufgespannt. Die erste Hilfsgrade ist parallel zur windabgewandten Seite angeordnet.

Die vordere linke Seite ist mit einem vorderen linksseitigen Winkel 56 von 20° zur windabgewandten Seite angeordnet. Der vordere linksseitige Winkel 56 liegt außerhalb der Windabweiserfläche 28. Der vordere linksseitige Winkel 56 wird zwischen der ersten Hilfsgraden 53 und der vorderen linken Seite aufgespannt.

Die vordere linke Seite ist mit einem Innenwinkel 58 von 28° zur rechten Seite angeordnet. Der Innenwinkel 58 liegt innerhalb der Windabweiserfläche 28. Der Innenwinkel 58 wird zwischen einer gedachten zweiten Hilfsgraden 60 und der rechten Seite aufgespannt. Die zweite Hilfsgrade 60 ist parallel zur vorderen linken Seite angeordnet.

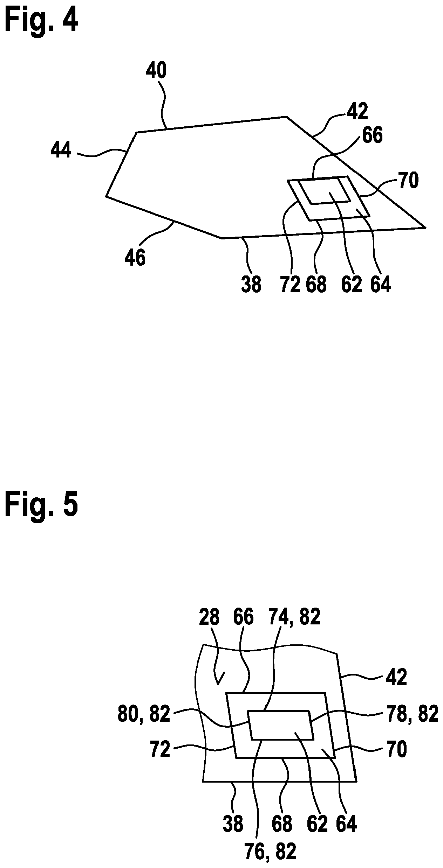

Im Ausführungsbeispiel weist die Windabweiserfläche 28 einen Knopf 62 auf. Der Knopf ist als Rastknopf ausgebildet und ist bei einem in der Adaptereinheit montierten bzw. eingerasteten Wischarm weitgehend mittig in einer Knopföffnung 64 auf (siehe Figur 3) angeordnet. Figur 4 zeigt die Adaptereinheit, in der der Wischarm nicht eingerastet ist. Der Knopf liegt an einer oberen Kante 66 der Knopföffnung an.

Im Ausführungsbeispiel ist die obere Kante 66 der Knopföffnung parallel zur windzugewandten Seite 38 ausgerichtet. In Varianten ist die obere Kante 66 der Knopföffnung weitgehend parallel zur windzugewandten Seite 38 ausgerichtet. Eine der oberen Kante 66 gegenüberliegende untere Kante 68 der Knopföffnung ist im Ausführungsbeispiel parallel zur windzugewandten Seite 38 ausgerichtet. In Varianten ist die untere Kante 68 weitgehend parallel zur windzugewandten Seite 38 ausgerichtet.

Eine rechte Kante 70 der Knopföffnung ist im Ausführungsbeispiel parallel zur rechten Seite 42 ausgerichtet. In Varianten ist die rechte Kante 70 weitgehend parallel zur rechten Seite 42 ausgerichtet. Eine der rechten Kante 70 gegenüberliegende linke Kante 72 der Knopföffnung ist im Ausführungsbeispiel parallel zur rechten Seite 42 ausgerichtet. In Varianten ist die linke Kante 72 weitgehend parallel zur rechten Seite 42 ausgerichtet.

Figur 5 zeigt eine Detailansicht der Knopföffnung 64 mit dem Knopf 62. Im Ausführungsbeispiel ist eine obere Seitenkante 74 des Knopfs 62 parallel zur oberen Kante 66 angeordnet. Die obere Seitenkante 74 ist parallel zur windzugewandten Seite 38 angeordnet. In Varianten ist die obere Seitenkante 74 weitgehend parallel zur oberen Kante 66 angeordnet. In Varianten ist die obere Seitenkante 74 weitgehend parallel zur windzugewandten Seite 38 angeordnet.

Im Ausführungsbeispiel ist eine untere Seitenkante 76 des Knopfs 62 parallel zur unteren Kante 68 angeordnet. Die untere Seitenkante 76 ist parallel zur windzugewandten Seite 38 angeordnet. In Varianten ist die untere Seitenkante 76 weitgehend parallel zur unteren Kante 68 angeordnet. In Varianten ist die obere Seitenkante 76 weitgehend parallel zur windzugewandten Seite 38 angeordnet.

Im Ausführungsbeispiel ist eine rechte Seitenkante 78 des Knopfs 62 parallel zur rechten Kante 70 angeordnet. Die rechte Seitenkante 78 ist parallel zur rechten Seite 42 angeordnet. In Varianten ist die rechte Seitenkante 78 weitgehend parallel zur rechten Kante 70 angeordnet. In Varianten ist die rechte Seitenkante 78 weitgehend parallel zur rechten Seite 42 angeordnet.

Im Ausführungsbeispiel ist eine linke Seitenkante 80 des Knopfs 62 parallel zur linken Kante 72 angeordnet. Die linke Seitenkante 80 ist parallel zur rechten Seite 42 angeordnet. In Varianten ist die linke Seitenkante 80 weitgehend parallel zur linken Kante 72 angeordnet. In Varianten ist die linke Seitenkante 80 weitgehend parallel zur rechten Seite 42 angeordnet.

Die obere Seitenkante 74, untere Seitenkante 76, rechte Seitenkante 78 und linke Seitenkante 80 bilden eine Knopfkontur 82 des Knopfs 62. Eine Knopfkontur ist eine Umrandung des Knopfs. Die rechte Seitenkante 78 und die linke Seitenkante 80 sind zwei gegenüberliegende Seitenkanten der Knopfkontur 82 des Knopfs.

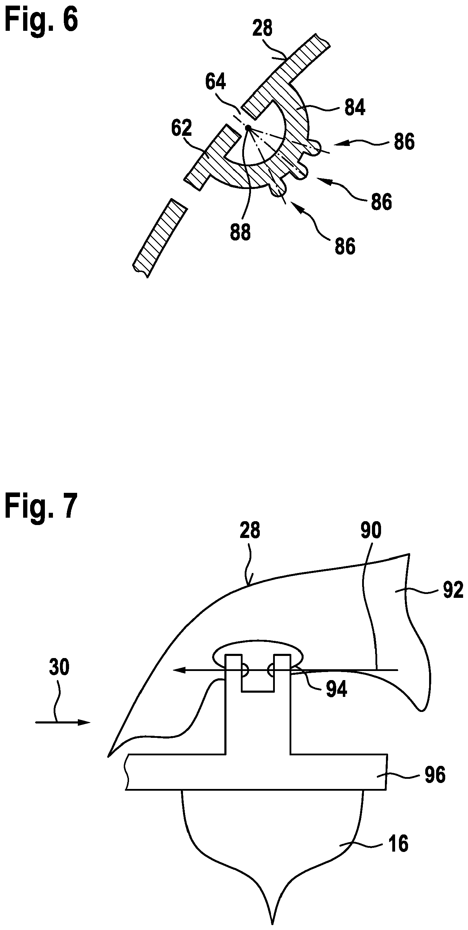

In Figur 6 ist eine Seitenansicht des Knopfs 62 aus der Wischarmrichtung 26 abgebildet. Die Zeichenebene der Figur 6 liegt senkrecht zur Wischarmrichtung 26. Figur 6 ist ein Schnitt durch den Knopf nach Linie VI-VI (siehe Figur 1). Der Knop 62 weist eine Feder auf, welche als Bogenstück 84 ausgebildet ist. Das Bogenstück weist drei Rippen 86 auf. Die Rippen 86 sind jeweils radial zu einem Bogenstückmittelpunkt 88 ausgerichtet. Die Rippen 86 sind jeweils an einem äußeren Rand des Bogenstücks angeordnet.

Im Ausführungsbeispiel ist das Abdeckelement 20 über eine nicht gezeigte Rastverbindung mit dem Grundelement 22 fest verbindbar. Das Grundelement 22 weist eine nicht gezeigte Wischarmaufnahme auf. Die Wischarmaufnahme ist dazu eingerichtet, an den Wischarm zu koppeln, so dass der Wischarm um eine Lagerachse 90 (siehe Figur 2) schwenkbar bzw. drehbar ist. Die Lagerachse 90 ist im Ausführungsbeispiel parallel zur Windanströmrichtung 30 ausgerichtet. Das Grundelement 22 ist dazu eingerichtet, das Wischblatt über eine nicht gezeigte Steckverbindung aufzunehmen.

Figur 7 zeigt einen Schnitt durch eine alternative Ausführungsform der Adaptereinheit senkrecht zur Wischarmrichtung 26. Die Adaptereinheit 12 weist eine Wischarmadaptereinheit 92 auf. Die Wischarmadaptereinheit weist die Windabweiserfläche 28 auf. Die Wischarmadaptereinheit weist eine nicht gezeigte Wischarmöffnung auf, welche dazu eingerichtet ist, den Wischarm aufzunehmen. Die Wischarmöffnung ist eine Öffnung für einen Aufnahmekanal, in den der Wischarm einführbar ist. Der Aufnahmekanal verläuft weitgehend parallel zur Wischarmrichtung. Die Wischarmadaptereinheit weist im Ausführungsbeispiel den Knopf als Fixiermittel auf, welcher zu einer lösbaren Kopplung des Wischarms mit der Wischarmadaptereinheit vorgesehen ist. Die Wischarmadaptereinheit 92 weist eine Wischblattadaptereinheitaufnahme 94 auf, welche dazu vorgesehen ist, eine Wischblattadaptereinheit 96 um die Lagerachse 90 schwenkbar aufzunehmen. Die Wischblattadaptereinheit 96 ist dazu eingerichtet vorgesehen, das Wischblatt 16 aufzunehmen.

In vorteilhaften Ausführungsformen weist die Windabweiserfläche 28 eine veränderte bzw. besondere Oberflächenstruktur auf. Die Oberfläche kann wenigstens bereichsweise aufgeraut sein und/oder eine Haifischhautstruktur aufweisen und/oder eine Golfballstruktur aufweisen. Eine solche Oberflächenstruktur beeinflusst den über sie strömenden Luftstrom. Auf diese Weise lassen sich die aerodynamischen Eigenschaften der Windabweiserfläche verbessern. Insbesondere ist es möglich, über die Windabweiserfläche wirkende Anpresskräfte durch eine Auswahl der Art und Anordnung der veränderten Oberflächenstruktur präzise einzustellen.

## Patentansprüche

1. Adaptereinheit (12), die zu einer Kopplung, insbesondere lösbaren Kopplung eines Wischblatts (16) mit einem Wischarm (14) vorgesehen ist, aufweisend eine Windabweiserfläche (28), welche dazu eingerichtet ist, eine anströmende Luft abzuweisen und das Wischblatt (16) an eine Fahrzeugscheibe (18) zu drücken, wobei die Windabweiserfläche (28) durch einen Windabweiserflächenrand (30) umrandet wird und der Windabweiserflächenrand (30) wenigstens
• eine windzugewandte Seite (38) - welche sich weitgehend in einer Wischarmrichtung (26) erstreckt - sowie
• eine windabgewandte Seite (40) - welche sich weitgehend in die Wischarmrichtung (26) erstreckt - sowie
• eine rechte Seite (42) - welche zwischen der windzugewandten Seite (38) und der windabgewandten Seite (40) angeordnet ist und an der Wischarmseite des Adapters angeordnet ist, an der vorgesehen ist, die Adaptereinheit (12) mit dem Wischarm (14) zu koppeln - sowie
• eine hintere linke Seite (44) - welche an der windabgewandten Seite (40) angrenzt und an der Seite des Adapters angeordnet ist, welche der Wischarmseite gegenüberliegt - und
• eine vordere linke Seite (46) - welche an der windzugewandten Seite (38) angrenzt und an der Seite des Adapters angeordnet ist, welche der Wischarmseite gegenüberliegt,
aufweist, **dadurch gekennzeichnet, dass** die windabgewandte Seite (40) und die rechte Seite (42) einen hinteren Winkel (48) zwischen 110° und 160°, bevorzugt zwischen 120° und 150°, besonders bevorzugt zwischen 130° und 140° aufspannen, wobei die windzugewandte Seite (38) mit einem vorderen rechtsseitigen Winkel (52) zwischen 2.5° und 15.0° zur windabgewandten Seite (40) angeordnet ist.

2. Adaptereinheit (12) nach Anspruch 1, **dadurch gekennzeichnet, dass** die hintere linke Seite (44) und die vordere linke Seite (46) einen linksseitigen Winkel (50) zwischen 70° und 120°, bevorzugt zwischen 80° und 110°, besonders bevorzugt zwischen 90° und 100° aufspannen.

3. Adaptereinheit (12) nach einem der vorhergehenden Ansprüche, **dadurch gekennzeichnet, dass** die windzugewandte Seite (38) mit dem vorderen rechtsseitigen Winkel (52) zwischen 5.0° und 10.0° zur windabgewandten Seite (40) angeordnet ist.

4. Adaptereinheit (12) nach einem der vorhergehenden Ansprüche, **dadurch gekennzeichnet, dass** die vordere linke Seite (46) mit einem vorderen linksseitigen Winkel (56) zwischen 10° und 60°, bevorzugt zwischen 20° und 50°, besonders bevorzugt zwischen 30° und 40° zur windabgewandten Seite (40) angeordnet ist.

5. Adaptereinheit (12) nach einem der vorhergehenden Ansprüche, **dadurch gekennzeichnet, dass** die vordere linke Seite (46) mit einem Innenwinkel (58) zwischen 0° und 50°, bevorzugt zwischen 10° und 40°, besonders bevorzugt zwischen 20° und 30° zur rechten Seite (42) angeordnet ist.

6. Adaptereinheit (12) nach einem der vorhergehenden Ansprüche, **dadurch gekennzeichnet, dass** die Windabweiserfläche (28) einen viereckigen, herunterdrückbaren Knopf (62) aufweist, welcher dazu eingerichtet ist, den Wischarm (14) lösbar mit der Adaptereinheit (12) zu koppeln, wobei zwei gegenüberliegende Seitenkanten einer Knopfkontur (82) des Knopfs (62) parallel oder weitgehend parallel zur rechten Seite (42) ausgerichtet sind.

7. Adaptereinheit (12) nach einem der vorhergehenden Ansprüche, **dadurch gekennzeichnet, dass** die Windabweiserfläche (28) einen Knopf (62) aufweist, welcher dazu eingerichtet ist, den Wischarm (14) lösbar mit der Adaptereinheit (12) zu koppeln, wobei der Knopf (62) als ein in einer Knopföffnung (64) angeordneter Einrastknopf ausgebildet ist, wobei der Einrastknopf so ausgebildet ist, dass der Einrastknopf mittig oder weitgehend mittig in der Knopföffnung (64) angeordnet ist, wenn der Wischarm (14) eingerastet ist und dass der Einrastknopf an einer oberen Kante (66) der Knopföffnung (64) anliegt, wenn der Wischarm (14) nicht eingerastet ist.

8. Adaptereinheit (12) nach einem der vorhergehenden Ansprüche, **dadurch gekennzeichnet, dass** die Windabweiserfläche (28) einen Knopf (62) aufweist, welcher dazu eingerichtet ist, den Wischarm (14) lösbar mit der Adaptereinheit (12) zu koppeln, wobei der Knopf (62) als ein Federknopf mit einer Feder zum Aufbringen einer Rückstellkraft ausgebildet ist, wobei die Feder ein Bogenstück (84) mit wenigstens einer Rippe (86), vorzugsweise drei Rippen aufweist, wobei die wenigstens eine Rippe (86) parallel oder weitgehend parallel zu einem Radius des Bogenstücks (84) ausgerichtet ist und dazu vorgesehen ist, das Bogenstück (84) zu versteifen.

9. Adaptereinheit (12) nach einem der vorhergehenden Ansprüche, **dadurch gekennzeichnet, dass** die Adaptereinheit (12) dazu eingerichtet ist, den Wischarm (14) mit dem Wischblatt (16) um eine Lagerachse (90) schwenkbar zu verbinden.

10. Adaptereinheit (12) nach einem der vorhergehenden Ansprüche, umfassend eine Wischarmadaptereinheit (92) und eine Wischblattadaptereinheit (96), wobei die Wischarmadaptereinheit (92) zur Kopplung mit dem Wischarm (14) vorgesehen ist und die Wischblattadaptereinheit (96) dazu vorgesehen ist, das Wischblatt (16) aufzunehmen, wobei die Wischarmadaptereinheit (92) eine Wischblattadaptereinheitaufnahme (94) aufweist, welche dazu vorgesehen ist, die Wischblattadaptereinheit (96) um die Lagerachse (90) schwenkbar aufzunehmen.

11. Adaptereinheit (12) nach einem der vorhergehenden Ansprüche, umfassend ein Grundelement (22), ein Abdeckelement (20) und eine Wischarmaufnahme, welche dazu vorgesehen ist, den Wischarm (14) um die Lagerachse (90) schwenkbar aufzunehmen, wobei das Abdeckelement (20) mit dem Grundelement (22) verbindbar ausgebildet ist und die Wischarmaufnahme weitgehend abdeckt, und wobei das Abdeckelement (20) die Windabweiserfläche (28) aufweist, und wobei das Grundelement (22) dazu eingerichtet ist das Wischblatt (16) aufzunehmen, und wobei insbesondere das Abdeckelement (20) mit dem Grundelement (22) fest verbindbar ausgebildet ist, so dass das mit dem Grundelement (22) verbundene Abdeckelement (20) gegenüber dem Grundelement (22) weitgehend unbeweglich ist.

## Claims

1. Adapter unit (12) which is provided for coupling, in particular releasably coupling, a wiper blade (16) to a wiper arm (14), having a wind deflector surface (28) which is designed to deflect an incident flow of air and to press the wiper blade (16) against a vehicle windscreen (18), wherein the wind deflector surface (28) is bordered by a wind deflector surface periphery (30), and the wind deflector surface periphery (30) has at least
• a side (38) facing the wind - which extends largely in a wiper arm direction (26) - and
• a side (40) facing away from the wind - which extends largely in the wiper arm direction (26) - and
• a right side (42) - which is disposed between the side (38) facing the wind and the side (40) facing away from the wind and is disposed on that wiper arm side of the adapter on which it is provided that the adapter unit (12) is coupled to the wiper arm (14) - and
• a rear left side (44) - which adjoins the side (40) facing away from the wind and is disposed on that side of the adapter that is situated opposite the wiper arm side - and
• a front left side (46) - which adjoins the side (38) facing the wind and is disposed on that side of the adapter that is situated opposite the wiper arm side,
**characterized in that** the side (40) facing away from the wind and the right side (42) define a rear angle (48) of between 110° and 160°, preferably between 120° and 150°, particularly preferably between 130° and 140°, wherein the side (38) facing the wind is disposed at a front right-hand angle (52) of between 2.5° and 15.0° relative to the side (40) facing away from the wind.

2. Adapter unit (12) according to Claim 1, **characterized in that** the rear left side (44) and the front left side (46) define a left-hand angle (50) of between 70° and 120°, preferably between 80° and 110°, particularly preferably between 90° and 100°.

3. Adapter unit (12) according to either of the preceding claims, **characterized in that** the side (38) facing the wind is disposed at a front right-hand angle (52) of between 5.0° and 10.0° in relation to the side (40) facing away from the wind.

4. Adapter unit (12) according to one of the preceding claims, **characterized in that** the front left side (46) is disposed at a front left-hand angle (56) of between 10° and 60°, preferably between 20° and 50°, particularly preferably between 30° and 40° in relation to the side (40) facing away from the wind.

5. Adapter unit (12) according to one of the preceding claims, **characterized in that** the front left side (46) is disposed at an internal angle (58) of between 0° and 50°, preferably between 10° and 40°, particularly preferably between 20° and 30° in relation to the right side (42).

6. Adapter unit (12) according to one of the preceding claims, **characterized in that** the wind deflector surface (28) has a rectangular push button (62) which is designed to releasably couple the wiper arm (14) to the adapter unit (12), wherein two opposite lateral edges of a button contour (82) of the button (62) are oriented parallel or largely parallel to the right side (42).

7. Adapter unit (12) according to one of the preceding claims, **characterized in that** the wind deflector surface (28) has a button (62) which is designed to releasably couple the wiper arm (14) to the adapter unit (12), wherein the button (62) is in the form of a latching button which is disposed in a button opening (64), wherein the latching button is formed such that the latching button is disposed centrally or largely centrally in the button opening (64) when the wiper arm (14) is latched in, and **in that** the latching button rests on an upper edge (66) of the button opening (64) when the wiper arm (14) is not latched in.

8. Adapter unit (12) according to one of the preceding claims, **characterized in that** the wind deflector surface (28) has a button (62) which is designed to releasably couple the wiper arm (14) to the adapter unit (12), wherein the button (62) is in the form of a spring button with a spring for applying a restoring force, wherein the spring has an arcuate piece (84) with at least one rib (86), preferably three ribs, wherein the at least one rib (86) is oriented parallel or largely parallel to a radius of the arcuate piece (84) and is provided for reinforcing the arcuate piece (84).

9. Adapter unit (12) according to one of the preceding claims, **characterized in that** the adapter unit (12) is designed to connect the wiper arm (14) to the wiper blade (16) pivotably about a mounting axis (90).

10. Adapter unit (12) according to one of the preceding claims, comprising a wiper arm adapter unit (92) and a wiper blade adapter unit (96), wherein the wiper arm adapter unit (92) is provided for coupling to the wiper arm (14), and the wiper blade adapter unit (96) is provided for receiving the wiper blade (16), wherein the wiper arm adapter unit (92) has a wiper blade adapter unit receptacle (94) which is provided for receiving the wiper blade adapter unit (96) pivotably about the mounting axis (90).

11. Adapter unit (12) according to one of the preceding claims, comprising a base element (22), a cover element (20), and a wiper arm receptacle which is provided for receiving the wiper arm (14) pivotably about the mounting axis (90), wherein the cover element (20) is designed for connection to the base element (22) and largely covers the wiper arm receptacle, and wherein the cover element (20) has the wind deflector surface (28), and wherein the base element (22) is designed to receive the wiper blade (16), and wherein in particular the cover element (20) is designed for fixed connection to the base element (22) such that the cover element (20) connected to the base element (22) is largely immovable in relation to the base element (22).

## Revendications

1. Unité formant adaptateur (12), qui est prévue pour un accouplement, en particulier un accouplement libérable d'un balai d'essuie-glace (16) à un bras d'essuie-glace (14), présentant une surface de déflexion d'air (28), laquelle est conçue pour dévier de l'air incident et pour presser le balai d'essuieglace (16) contre une vitre de véhicule (18), la surface de déflexion d'air (28) étant bordée par un bord de surface de déflexion d'air (30) et le bord de surface de déflexion d'air (30) présentant au moins
• un côté (38) orienté vers le vent - lequel côté s'étend dans une large mesure dans une direction de bras d'essuie-glace (26) - ainsi que
• un côté (40) orienté à l'opposé du vent - lequel côté s'étend dans une large mesure dans la direction de bras d'essuie-glace (26) - ainsi que
• un côté droit (42) - lequel est disposé entre le côté (38) orienté vers le vent et le côté (40) orienté à l'opposé du vent et est disposé sur le côté bras d'essuie-glace de l'adaptateur, côté sur lequel il est prévu d'accoupler l'unité formant adaptateur (12) au bras d'essuie-glace (14) - ainsi que
• un côté arrière gauche (44) - lequel est adjacent au côté (40) orienté à l'opposé du vent et est disposé sur le côté de l'adaptateur qui est opposé au côté bras d'essuie-glace - et
• un côté avant gauche (46) - lequel est adjacent au côté (38) orienté vers le vent et est disposé sur le côté de l'adaptateur qui est opposé au côté bras d'essuie-glace,
**caractérisée en ce que** le côté (40) orienté à l'opposé du vent et le côté droit (42) définissent un angle arrière (48) entre 110° et 160°, de préférence entre 120° et 150°, de manière particulièrement préférée entre 130° et 140°, le côté (38) orienté vers le vent étant disposé suivant un angle avant du côté droit (52) entre 2,5° et 15,0° par rapport au côté (40) orienté à l'opposé du vent.

2. Unité formant adaptateur (12) selon la revendication 1, **caractérisée en ce que** le côté arrière gauche (44) et le côté avant gauche (46) définissent un angle du côté gauche (50) entre 70° et 120°, de préférence entre 80° et 110°, de manière particulièrement préférée entre 90° et 100°.

3. Unité formant adaptateur (12) selon l'une des revendications précédentes, **caractérisée en ce que** le côté (38) orienté vers le vent est disposé suivant l'angle avant du côté droit (52) entre 5,0° et 10,0° par rapport au côté (40) orienté à l'opposé du vent.

4. Unité formant adaptateur (12) selon l'une des revendications précédentes, **caractérisée en ce que** le côté avant gauche (46) est disposé suivant un angle avant du côté gauche (56) entre 10° et 60°, de préférence entre 20° et 50°, de manière particulièrement préférée entre 30° et 40° par rapport au côté (40) orienté à l'opposé du vent.

5. Unité formant adaptateur (12) selon l'une des revendications précédentes, **caractérisée en ce que** le côté avant gauche (46) est disposé suivant un angle intérieur (58) entre 0° et 50°, de préférence entre 10° et 40°, de manière particulièrement préférée entre 20° et 30° par rapport au côté droit (42).

6. Unité formant adaptateur (12) selon l'une des revendications précédentes, **caractérisée en ce que** la surface de déflexion d'air (28) présente un bouton (62) rectangulaire pouvant être enfoncé, lequel est conçu pour accoupler le bras d'essuie-glace (14) à l'unité formant adaptateur (12) de manière libérable, deux arêtes latérales opposées d'un contour (82) du bouton (62) étant orientées parallèlement ou dans une large mesure parallèlement au côté droit (42).

7. Unité formant adaptateur (12) selon l'une des revendications précédentes, **caractérisée en ce que** la surface de déflexion d'air (28) présente un bouton (62), lequel est conçu pour accoupler le bras d'essuieglace (14) à l'unité formant adaptateur (12) de manière libérable, le bouton (62) étant réalisé sous la forme d'un bouton encliquetable disposé dans une ouverture de bouton (64), le bouton encliquetable étant réalisé de telle sorte que le bouton encliquetable est disposé centralement ou dans une large mesure centralement dans l'ouverture de bouton (64) lorsque le bras d'essuieglace (14) est encliqueté et que le bouton encliquetable s'appuie contre une arête supérieure (66) de l'ouverture de bouton (64) lorsque le bras d'essuieglace (14) n'est pas encliqueté.

8. Unité formant adaptateur (12) selon l'une des revendications précédentes, **caractérisée en ce que** la surface de déflexion d'air (28) présente un bouton (62), lequel est conçu pour accoupler le bras d'essuieglace (14) à l'unité formant adaptateur (12) de manière libérable, le bouton (62) étant réalisé sous la forme d'un bouton à ressort comportant un ressort pour l'application d'une force de rappel, le ressort présentant une pièce arquée (84) comportant au moins une nervure (86), de préférence trois nervures, l'au moins une nervure (86) étant orientée parallèlement ou dans une large mesure parallèlement à un rayon de la pièce arquée (84) et étant prévue pour raidir la pièce arquée (84).

9. Unité formant adaptateur (12) selon l'une des revendications précédentes, **caractérisée en ce que** l'unité formant adaptateur (12) est conçue pour relier le bras d'essuie-glace (14) au balai d'essuie-glace (16) de manière pivotante autour d'un axe de palier (90) .

10. Unité formant adaptateur (12) selon l'une des revendications précédentes, comprenant une unité formant adaptateur de bras d'essuie-glace (92) et une unité formant adaptateur de balai d'essuie-glace (96), l'unité formant adaptateur de bras d'essuie-glace (92) étant prévue pour l'accouplement au bras d'essuie-glace (14) et l'unité formant adaptateur de balai d'essuieglace (96) étant prévue pour recevoir le balai d'essuie-glace (16), l'unité formant adaptateur de bras d'essuie-glace (92) présentant un logement d'unité formant adaptateur de balai d'essuie-glace (94), lequel est prévu pour recevoir l'unité formant adaptateur de balai d'essuie-glace (96) de manière pivotante autour de l'axe de palier (90).

11. Unité formant adaptateur (12) selon l'une des revendications précédentes, comprenant un élément de base (22), un élément de recouvrement (20) et un logement de bras d'essuie-glace, lequel est prévu pour recevoir le bras d'essuie-glace (14) de manière pivotante autour de l'axe de palier (90), l'élément de recouvrement (20) étant réalisé de manière à pouvoir être relié à l'élément de base (22) et recouvrant dans une large mesure le logement de bras d'essuie-glace, et l'élément de recouvrement (20) présentant la surface de déflexion d'air (28), et l'élément de base (22) étant conçu pour recevoir le balai d'essuie-glace (16), et en particulier l'élément de recouvrement (20) étant réalisé de manière à pouvoir être relié fixement à l'élément de base (22), de sorte que l'élément de recouvrement (20) relié à l'élément de base (22) soit dans une large mesure immobile par rapport à l'élément de base (22).
